# EUROPÄISCHE PATENTANMELDUNG

(11) **EP 2 019 193 A1**
(43) Veröffentlichungstag der Anmeldung: **28.01.2009**
(21) Anmeldenummer: 07014702.0
(22) Anmeldetag: 26.07.2007
(51) Int. Cl.: F02B 77/11, B60R 13/08, F16L 59/08

(54) **Hitzeschild**

(71) Anmelder: REINZ-Dichtungs-GmbH, 89233 Neu-Ulm (DE)
(72) Erfinder: Schweiggart, Franz, 89284 Pfaffenhofen (DE); Dietrich-Radt, Thomas, 89231 Neu-Ulm (DE)
(74) Vertreter: Lang, Friedrich

(57) **Zusammenfassung**

Die Erfindung betrifft einen Hitzeschild zum Abschirmen eines Gegenstandes gegen Hitze und zur Absorption von Schall, der aus zwei unmittelbar benachbart zueinander angeordneten Metalllagen besteht. Eine erste der Metalllagen weist wenigstens einen gelochten Bereich auf, und die zweite der Metalllagen ist in wenigstens einem Teilbereich mit in Richtung auf die erste Metalllage weisenden Erhebungen versehen, deren Scheitel an der ersten Metalllage anliegen. Außer den zwei Metalllagen weist der erfindungsgemäße Hitzeschild keine weiteren Lagen auf, insbesondere keine nicht-metallische Isolationsschicht.

## Beschreibung

Die Erfindung betrifft einen Hitzeschild zum Abschirmen eines Gegenstandes gegen Hitze und/oder Schall, der zwei unmittelbar zueinander benachbarte Metalllagen aufweist.

Derartige Hitzeschilde werden als Schall- und/oder Hitzeschutz für andere Bauteile verwendet. Hitzeschilde werden beispielsweise in Motorräumen von Kraftfahrzeugen eingesetzt, insbesondere im Bereich der Abgasanlage, um benachbarte temperaturempfindliche Bauteile und Aggregate gegenüber unzulässiger Erhitzung zu schützen. Oft dienen die Hitzeschilde dabei gleichzeitig als Schallabsorber.

Um Schall in ausreichendem Maß absorbieren und Wärme absorbieren zu können, weisen Hitzeschilde üblicherweise eine wenigstens dreilagige Struktur auf. Die beiden Deckschichten bestehen in der Regel aus Metall, insbesondere aus Stahl, Aluminium-plattiertem Stahl oder einer Aluminium-(legierung). Zwischen den Deckschichten ist eine nicht-metallische Isolationsschicht eingebettet. Sie besteht zum Beispiel aus Glimmer oder Vermiculit, temperaturbeständiger Pappe, anorganischen oder organischen Faserverbundmaterialien oder anderen geeigneten Dämmstoffen wie beispielsweise Geweben, Gewirken und/oder Gestricken aus temperaturbeständigen Fasern.

Die nichtmetallischen Einlagen bedeuten im Hinblick auf das Recycling der Hitzeschilde einen erhöhten Aufwand und sind daher oftmals nicht erwünscht.

Es bestand daher Bedarf an einem ganzmetallischen recyclingfähigen Hitzeschild, der bei möglichst geringem Gewicht und ohne Fasereinlage bzw. ohne porösen Absorber dennoch möglichst stabil ist und guten Schall- und Hitzeschutz bietet.

Aufgabe der Erfindung ist es entsprechend, einen Hitzeschild anzugeben, der die obigen Nachteile nicht aufweist und in einfacher Weise herstellbar ist.

Die Lösung dieser Aufgabe gelingt mit dem Hitzeschild gemäß Anspruch 1. Bevorzugte Weiterbildungen sind in den Unteransprüchen beschrieben.

Die Erfindung betrifft also einen Hitzeschild zum Abschirmen eines Gegenstandes gegen Hitze und zur Absorption von Schall, der aus zwei unmittelbar benachbart zueinander angeordneten Metalllagen besteht. Eine erste der Metalllagen weist wenigstens einen gelochten Bereich auf, und die zweite der Metalllagen ist in wenigstens einem Teilbereich mit in Richtung auf die erste Metalllage weisenden Erhebungen versehen, deren Scheitel an der ersten Metalllage anliegen.

Außer den zwei Metalllagen weist der erfindungsgemäße Hitzeschild keine weiteren Lagen auf, insbesondere keine nicht-metallische Isolationsschicht. Überraschenderweise wurde festgestellt, dass eine solche Isolationsschicht für eine gute Schall- und Wärmeabsorption gar nicht benötigt wird, wenn die beiden Metallschichten in der beschriebenen Weise ausgebildet und zueinander orientiert werden. Die mit dem gelochten Bereich versehene erste Metalllage wird dabei zur Schallquelle hin angeordnet und ermöglicht durch ihre Perforierung, dass Schall nicht reflektiert wird, sondern in das Innere des Hitzeschildes gelangen kann und dort absorbiert wird. Dabei dienen die zwischen den Erhebungen der zweiten Metalllage gebildeten Resonanzräume zur Einstellung der zu absorbierenden Frequenzen. Gleichzeitig bildet das Luftpolster im Inneren des Hitzeschilds eine ausgezeichnete Isolationsschicht gegen Hitze.

Um eine möglichst gute und vollständige Schallabsorption zu gewährleisten, erstreckt sich der gelochte Bereich bevorzugt über die gesamte Fläche der ersten Metalllage. Der Strömungswiderstand, mit dem Schall in das Innere des Hitzeschildes eindringen kann und damit die Absorption, lässt sich über die Ausgestaltung des gelochten Bereiches gezielt einstellen. Dabei können Anzahl, Größe und Form der Löcher sowie deren Verteilung im gelochten Bereich variiert werden. Ist nicht die gesamte erste Metalllage gelocht, können auch mehrere gelochte Bereiche über die erste Metalllage verteilt sein, wobei die Ausgestaltung der Löcher - abgesehen von einer Variation innerhalb eines jeden Bereiches - von Bereich zu Bereich unterschiedlich sein kann. Gelochte Bereiche werden zweckmäßig vor allem dort angeordnet, wo mit hoher Schalleinstrahlung zu rechnen ist. Nicht oder nur wenig gelochte Bereiche können dort vorgesehen werden, wo besonders starke dreidimensionale Verformungen des Hitzeschildes erfolgen und durch die Schwächung der ersten Metalllage aufgrund der Lochung sonst eine Rissbildung zu befürchten wäre.

Die Form der Löcher ist grundsätzlich beliebig. Eckige oder gerundete Außenkonturen, symmetrische oder asymmetrische Formen sind möglich. Im Hinblick auf die einfache Herstellung sind kreisrunde Löcher bevorzugt. Der Durchmesser der Löcher wird in der Regel in einem Bereich von 0,05 mm bis 3 mm, insbesondere von 0,08 mm bis 1 mm, liegen. Bei unsymmetrischen Löchern wird als Durchmesser dabei der größte Durchmesser des Loches herangezogen. Im Allgemeinen wird der gelochte Bereich 1 bis 200 und insbesondere 3 bis 100 Löcher pro Quadratzentimeter enthalten. Die von den Löchern eingenommene Fläche beträgt bevorzugt zwischen 0,1 % und 20 %, insbesondere zwischen 0,2 % und 10 %, der Gesamtfläche der ersten Metalllage. Die perforierte Metalllage ist bevorzugt glatt. Wenn die Perforation jedoch mittels Spießens oder mittels Laserschneidens erzeugt wird, kann eine zusätzliche Oberflächenstruktur entstehen, bei der die unmittelbare Umgebung der jeweiligen Löcher aus der Ebene der Metalllage herausgeformt sein kann. Die dabei entstehenden Strukturen sind eine unmittelbare Fortsetzung des Lochverlaufs quer durch das jeweilige Blech. Eine absichtliche bzw. gezielte Noppalierung der perforierten Metalllage findet jedoch nicht statt.

Besonders bevorzugt ist es, wenn die Ausbildung des wenigstens einen gelochten Bereiches, sowohl was dessen Lage als auch die Ausgestaltung der Lochung angeht, auf die Ausbildung der zweiten Metalllage abgestimmt ist. Die Abstimmung erfolgt dabei insbesondere im Hinblick auf eine optimierte Schall- und Hitzeabsorption durch den zweilagigen Hitzeschild. Besondere Bedeutung kommt dabei der Ausgestaltung der Resonanzräume zu, die von der Schallquelle aus gesehen hinter dem wenigstens einen gelochten Bereich der ersten Metalllage liegen. Wichtig ist dabei vor allem die Größe und Form des zwischen erster und zweiter Metalllage eingeschlossenen Resonanzraums. Er ist so gestaltet, dass der Schall in der Lochung der ersten Metalllage schwingt und im auf diesem Resonanzraum stehenden Federvolumen quasi "totläuft". Die Resonanzräume dienen gleichzeitig als Isolationsschicht gegen Hitze, wobei hier die Hitzequelle grundsätzlich sowohl auf der Seite der ersten oder der zweiten Metalllage befindlich sein kann. Die zweite Metalllage dient als Schall- und Wärmebarriere und weist zumindest in denjenigen Bereichen, die den gelochten Bereichen gegenüber liegen, keine Öffnungen auf. Bevorzugt ist die zweite Metalllage ganz frei von Lochungen, wenn man von denjenigen Öffnungen absieht, die zur Durchführung von Befestigungsmitteln oder Bauteilen wie Sonden o. ä. dienen. Diese Öffnungen - die auch erheblich größer sind als die Mikroperforationen der ersten Metalllage - gehen jedoch durch beide Metalllagen insgesamt hindurch, und die Metalllagen sind üblicherweise im Bereich um diese Öffnungen herum gegeneinander abgedichtet, sodass hier Schall und Hitze nicht ungehindert nach außen dringen können.

Erfindungsgemäß werden die Resonanzräume zwischen erster und zweiter Metalllage des Hitzeschildes dadurch erzeugt, dass in die zweite Metalllage Erhebungen eingeformt werden. 10 bis 100%, bevorzugt aber ungefähr 45 bis 55 % der Erhebungen weisen in Richtung auf die erste Metalllage, an der die Scheitel der Erhebungen anliegen. Um die Erhebungen herum entstehen die Resonanzräume, deren Anordnung, Form und Größe von Lage, Form und Größe der Erhebungen abhängt.

Üblicherweise werden die Erhebungen in eine ebene, dreidimensional noch nicht verformte Vorform der zweiten Metalllage eingeformt, beispielsweise durch Prägen. Anschließend wird die zweite Metalllage mit der ersten Metalllage verbunden, die ebenfalls noch nicht dreidimensional verformt ist. Die Verbindung zwischen beiden Metalllagen kann auf an sich übliche Weise erfolgen, zum Beispiel dadurch, dass der Rand der einen Metalllage zumindest abschnittsweise um den Rand der anderen gebördelt wird. Anschließend werden beide Metalllagen gemeinsam in die endgültige Form des Hitzeschildes dreidimensional verformt. Dabei kann es passieren, dass sich die Form und das Volumen der zwischen beiden Lagen befindlichen Resonanzräume verändert. Diese Veränderungen sollten bei der Auslegung der Erhebungen vorab berücksichtigt werden, damit die Resonanzräume im fertigen Hitzeschild die gewünschte Gestalt aufweisen. In einzelnen Anwendungsfällen kann es sinnvoll sein, die beiden Metalllagen nicht nur an ihren Rändern, sondern auch im Bereich ihrer Flächen miteinander zu verbinden, damit sich die Metalllagen beim Verformen nicht unbeabsichtigt voneinander wegbewegen. Dazu können beispielsweise in kritischen Bereichen Schweißpunkte zur Verbindung beider Metalllagen gesetzt werden. Dies ist jedoch wegen des zusätzlichen Aufwands nicht bevorzugt.

Die Form und Größe der Erhebungen wird unter Berücksichtigung der obigen Aspekte gewählt. Eine weitere Rolle bei der Ausgestaltung der Erhebungen spielt außerdem die beabsichtigte dreidimensionale Verformung des Hitzeschildes. Die Erhebungen werden zweckmäßig so gelegt, dass sie der gewünschten Formgebung nicht hindernd im Wege stehen. Abgesehen davon, kann die Form der Erhebungen frei gewählt werden und ist nicht besonders beschränkt. Beispielsweise können die Erhebungen die Form von runden oder ovalen Noppen aufweisen, die die Resonanzräume zumindest abschnittsweise seitlich begrenzen. Dabei ist es grundsätzlich nicht notwendig, dass die Resonanzräume vollständig gegeneinander abgeschlossen sind. Sie können vielmehr auch ineinander übergehen und weitgehend gegeneinander geöffnet sein. In einer bevorzugten Ausführungsform der Erfindung beispielsweise sind die Erhebungen als Noppen ausgebildet. Dabei ergeben sich weitgehend gegeneinander offene Resonanzräume zwischen erster und zweiter Metalllage, ähnlich einem säulengestützen Gewölbe.

Das Volumen zwischen erster und zweiter Metalllage wird bevorzugt hauptsächlich über die Höhe der Erhebungen und speziell der Noppen vorgegeben. Die Höhe kann und wird dabei im Allgemeinen über die Fläche von erster und zweiter Metalllage variiert werden. Auch der Querschnitt der Noppen kann innerhalb einer Noppe und/oder von Noppe zu Noppe variieren. Bevorzugt haben die Noppen einen runden oder ovalen Querschnitt. Bei ovalen Formen sollte der maximale Querschnitt nicht mehr als das dreifach, bevorzugt nicht mehr als das doppelte, besonders bevorzugt nicht mehr als das 1,5 fache der maximalen Ausdehnung in dazu senkrechter Richtung betragen. Beispielhaft können für die Noppen die folgenden Abmessungen genannt werden: ein Durchmesser von 2 mm bis 20 mm, insbesondere von 3 mm bis 8 mm, und eine Höhe von 1 mm bis 20 mm, insbesondere von 1,5 mm bis 6 mm. Der Durchmesser wird dabei als der maximale Durchmesser zwischen den Fußpunkten der Noppe bestimmt. Fußpunkte sind diejenigen Punkte, an denen die Steigung der Noppenflanken auf Null übergeht oder ihr Vorzeichen wechselt. Die Höhe der Noppen wird als maximale Höhe zwischen einem Fußpunkt und dem Noppenscheitelpunkt oder der Noppenscheitelfläche gemessen.

Wie schon bei den Löchern in der ersten Metalllage kann sich auch die Verteilung der Noppen über die Fläche der zweiten Metalllage ändern. Üblicherweise werden 1 bis 10, insbesondere 1 bis 5, Noppen pro Quadratzentimeter der zweiten Metalllage vorhanden sein. Zumindest eine der beiden Lagen, bevorzugt aber beide, weisen hinsichtlich ihrer Noppen bzw. Löcher keinen Musterrapport in Bezug auf den gesamten Hitzeschild auf. Es kann auch vorteilhaft sein, wenn sich die Anordnung der Noppen unabhängig von der Anordnung der Löcher in der benachbarten Lage verändert. Durch gezielte Variation von Abmessungen und/oder Verteilung von Löchern und/oder Noppen über die von ihnen eingenommene Fläche und Abstimmung dieser Merkmale aufeinander kann ein Hitzeschild erhalten werden, der ausgezeichnete Schalldämpfungs- und Hitzeschutzwirkungen entfaltet, obwohl er lediglich aus zwei Schichten besteht und keine nichtmetallische Isolationsschicht aufweist.

Als Materialien für die metallischen Lagen können die bisher im Stand der Technik üblichen verwendet werden. Zum Beispiel bestehen sie aus Stahl, aluminiumplattiertem Stahl oder Aluminium(-legierungen). Feueraluminierter Stahl ist besonders weit verbreitet. Edelstähle werden für Einsatzgebiete mit Korrosionsrisiko und höherer Temperaturbelastung bevorzugt, nickelreiche Stähle für Hochtemperaturanwendungen. Aluminiumplattierter Stahl weist besondere Reflexionseigenschaften auf. Aufgrund des Fehlens der Isolationsschicht können die beiden metallischen Lagen vergleichsweise dick gestaltet werden, wenn die gleiche Dicke wie für einen dreilagigen Hitzeschild erreicht werden soll. Dadurch wird die Gefahr der Rissbildung bei der dreidimensionalen Verformung reduziert. Umgekehrt kann im Vergleich zu einem dreilagigen Hitzeschild bei Beibehaltung der Dicke der Metalllagen die Gesamtdicke des Hitzeschildes oder zumindest dessen Gewicht reduziert werden. Die Metalllagen des Hitzeschildes weisen üblicherweise eine Dicke von 0,15 bis 0,6 mm, bevorzugt 0,25 bis 0,4 mm, auf. Dabei ist es von der jeweiligen Anwendung abhängig, ob gleiche Blechstärken oder unterschiedliche Blechstärken für beide Lagen gewählt werden. Die Wahl der individuellen Blechstärken erfolgt in Abhängigkeit von der für die dreidimensionale Verformung notwendigen Elastizität und der für das verformte Bauteil notwendigen Steifigkeit so, dass eine Rissbildung im fertigen Teil unter Einsatzbedingungen vermieden wird, gleichzeitig aber auch eine möglichst regelmäßige und reproduzierbare Faltengebung möglich ist. Die Verarbeitung erfolgt in bisher üblicher Weise mit bislang üblichen Werkzeugen. Die Erhebungen werden zweckmäßig eingeprägt, die Löcher vorzugsweise genadelt oder gestanzt.

Der erfindungsgemäße Hitzeschild wird üblicherweise im Bereich von Verbrennungsmotor und Abgasstrang in Kraftfahrzeugen verwendet. Der Hitzeschild kann dabei zum Abschirmen des Abgaskrümmers, des Turboladers sowie von Anbauteilen wie Katalysator, Vorkatalysator, Partikelfilter oder sonstiger Komponenten eingesetzt werden.

Die Erfindung soll nachfolgend anhand von Zeichnungen näher erläutert werden. Diese Zeichnungen dienen ausschließlich der Illustration bevorzugter Ausführungsbeispiele der Erfindung, ohne dass die Erfindung auf diese beschränkt wäre. Gleiche Teile sind in den Zeichnungen mit gleichen Bezugszeichen versehen.

In den Figuren zeigen schematisch:
- Figur 1: eine perspektivische Ansicht eines erfindungsgemäßen Hitzeschildes,
- Figur 2: eine Teildraufsicht auf einen mit Erhebungen versehenen Bereich der zwei- ten Metalllage des erfindungsgemäßen Hitzeschildes der Figur 1 von der rückwärtigen Seite und
- Figur 3: einen Teilquerschnitt des Hitzeschilds der Figur 1 entlang der Linie A-A.

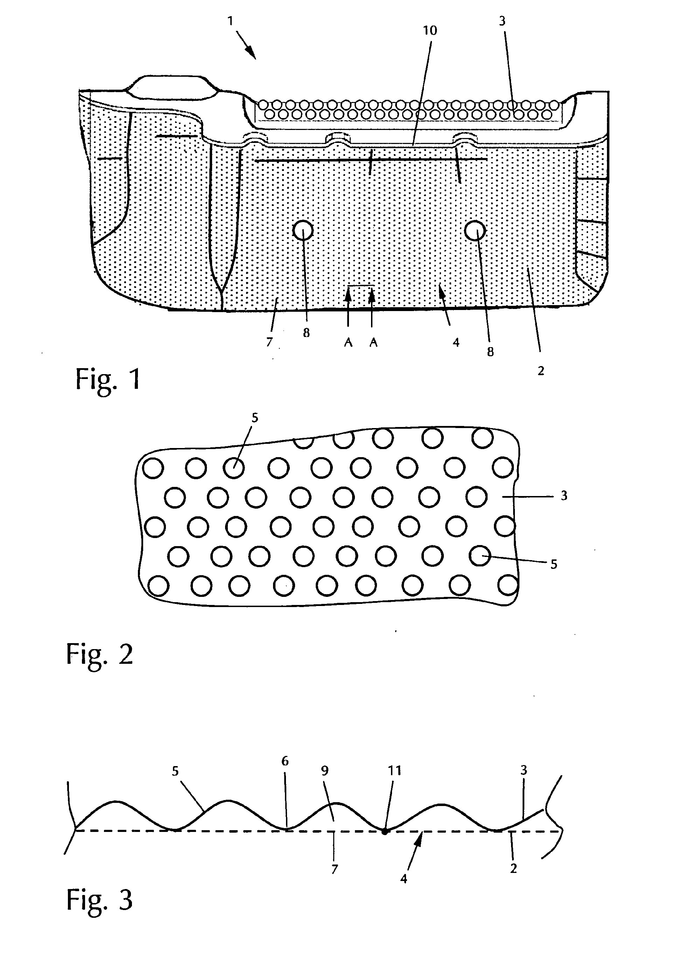

Figur 1 zeigt einen erfindungsgemäßen Hitzeschild (1). Der Hitzeschild besteht aus zwei metallischen Lagen 2 und 3, die zum Beispiel aus Aluminium-plattiertem Stahl bestehen. Die beiden metallischen Lagen 2 und 3 sind beispielsweise durch Umbördeln eines Randbereichs der einen metallischen Lage um den Rand der anderen metallischen Lage herum miteinander verbunden. Bevorzugterweise wird ein überstehender Randbereich der noppalierten Lage (3) um den Rand der perforierten Lage (2) umgebördelt. Grundsätzlich ist die Ausbildung des Bördels auch entgegengesetzt möglich. Der Bördel läuft bevorzugterweise um den gesamten Rand des Hitzeschildes um, kann aber auch in einzelnen Abschnitten ausgespart sein. Der Bördel im Bereich des Randes 10 des Hitzeschildes 1 ist hier nicht im Einzelnen dargestellt. Der Hitzeschild 1 weist im Wesentlichen eine sattelartige Form auf. Die dreidimensionale Verformung wurde durch Prägen aus einer flächigen und ebenen Vorform erzeugt, die aus einem Verbund von Metalllage 2 und Metalllage 3 besteht. Bei dem Hitzeschild 1 handelt es sich beispielsweise um einen solchen, der im Bereich eines Abgasstranges eines Kraftfahrzeuges verwendet wird. Für die Befestigung in diesem Bereich sind im Hitzeschild 1 Befestigungsmittelöffnungen 8 vorhanden, durch welche hindurch Befestigungsschrauben geführt und beispielsweise mit der Karosserie verschraubt werden.

Um den Schall einer in Richtung auf den Betrachter vor dem Hitzeschild 1 angeordneten Schallquelle wie eines Auspuffrohres absorbieren zu können, weist die erste, der Schallquelle zugewandte Metalllage 2 einen gelochten Bereich 4 auf. Im gezeigten Fall sind Löcher 7 über die gesamte Fläche der Metalllage 2 im Wesentlichen gleichmäßig verteilt vorhanden. Durch die Löcher 7 des Hitzeschildes wird der eintretende Schall absorbiert. Der Hohlraum 9, der einen Resonanzraum zur Absorption des Schalls bildet, wird dadurch erhalten, dass in die zweite Metalllage 3, die aus einem (abgesehen von den Befestigungsmittelöffnungen 8) nicht mit Löchern versehenen Metallblech besteht, eine Vielzahl von Erhebungen 5 eingeprägt ist. Die Erhebungen 5 weisen hier die Form runder Noppen auf. Die Kreise geben nur die Lage der Noppen 5 wieder, nicht deren genaue Größe. Die Noppen 5 wurden bereits vor dem dreidimensionalen Verformen des Hitzeschildes 1 in seine endgültige sattelartige Form in eine plane Vorform der Metalllage 3 eingeprägt. Die Noppen 5 weisen im dargestellten Beispiel alle eine gleiche Größe und Form auf und sind im Wesentlichen gleichmäßig über die Fläche der Metalllage 3 verteilt. Lediglich im Bereich der Außenränder des Hitzeschildes 1, unmittelbar an die Befestigungsmittelöffnungen 8 angrenzend und in den besonders stark dreidimensional verformten Bereichen (in Fig. 1 zum Beispiel mit den über die Metalllagen 2 und 3 verlaufenden durchgezogenen Linien angedeutet) sind keine Erhebungen 5 vorhanden.

Die Noppen 5 weisen mit ihren Scheiteln 6 in Richtung auf die erste Metalllage 2 und liegen an dieser an. Falls erforderlich, können beide Metalllagen 2 und 3 über ihre Fläche an einzelnen Punkten aneinander befestigt werden. Dies ist vor allem in solchen Bereichen sinnvoll, die besonders stark dreidimensional verformt werden und in denen die Gefahr besteht, dass sich die Metalllagen 2 und 3 beim Verformen voneinander entfernen. Fig. 3 zeigt beispielhaft eine solche Verbindungsstelle in Form eines Schweißpunktes 11.

## Patentansprüche

1. Hitzeschild (1) zum Abschirmen eines Gegenstandes gegen Hitze und zur Absorption von Schall, bestehend aus zwei unmittelbar benachbart zueinander angeordneten Metalllagen (2, 3), worin eine erste der Metalllagen (2) wenigstens einen gelochten Bereich (4) aufweist und die zweite der Metalllagen (3) in wenigstens einem Teilbereich mit in Richtung auf die erste Metalllage (2) weisenden Erhebungen (5) versehen ist, deren Scheitel (6) an der ersten Metalllage (2) anliegen.

2. Hitzeschild nach Anspruch 1,
worin sich der gelochte Bereich (4) über die gesamte Fläche der ersten Metalllage (2) erstreckt.

3. Hitzeschild nach Anspruch 1 oder 2,
**dadurch gekennzeichnet,**
worin der gelochte Bereich (4) 1 bis 200, insbesondere 3 bis 100, Löcher (7) pro Quadratzentimeter enthält.

4. Hitzeschild nach einem der vorhergehenden Ansprüche,
worin die von den Löchern (7) eingenommene Fläche zwischen 0,1 % und 20 %, insbesondere zwischen 0,2 % und 10 %, der Gesamtfläche der ersten Metalllage beträgt.

5. Hitzeschild nach einem der vorhergehenden Ansprüche,
worin die Löchern (7) einen Durchmesser von 0,05 mm bis 3 mm, insbesondere von 0,08 mm bis 1 mm, besitzen.

6. Hitzeschild nach einem der vorhergehenden Ansprüche,
worin die Erhebungen (5) als Noppen ausgebildet sind.

7. Hitzeschild nach Anspruch 6,
worin die Noppen wenigstens eine der folgenden Eigenschaften besitzen:
- einen Durchmesser von 2 mm bis 20 mm, insbesondere von 3 mm bis 8 mm,
- eine Höhe von 1 mm bis 10 mm, insbesondere von 1,5 mm bis 6 mm besitzen.

8. Hitzeschild nach Anspruch 6 oder 7,
worin 1 bis 10, insbesondere 1 bis 6, Noppen pro Quadratzentimeter der zweiten Metalllage (3) vorhanden sind.

9. Hitzeschild nach einem der vorhergehenden Ansprüche,
worin sich Abmessungen und/oder Verteilung von Löchern (7) und/oder Noppen (5) über die von ihnen eingenommene Fläche ändern.

10. Hitzeschild nach dem vorhergehenden Anspruch,
worin sich Abmessungen und/oder Verteilung von Löchern (7) und/oder Noppen (5) so über die von ihnen eingenommene Fläche ändern, dass zumindest eine Lage des Hitzeschildes keinen Musterrapport aufweist.

11. Hitzeschild nach einem der Ansprüche 9 oder 10,
worin sich Abmessungen und/oder Verteilung von Löchern (7) und Abmessungen und/oder Verteilung von Noppen (5) unabhängig voneinander verändern.

12. Hitzeschild nach einem der vorhergehenden Ansprüche,
worin die beiden Metalllagen (2,3) so miteinander verbunden sind, dass der Rand einer der beiden Metalllagen (2,3) um den Rand der anderen Metalllage (3,2) herum zumindest abschnittsweise umgefalzt wird.

13. Hitzeschild nach dem vorhergehenden Anspruch,
worin der Rand der zweiten Metalllage (3) um den Rand der ersten Metalllage (2) zumindest abschnittsweise umgefalzt wird.
